# EUROPÄISCHE PATENTSCHRIFT

(11) **EP 1 067 000 B1**
(45) Veröffentlichungstag und Bekanntmachung des Hinweises auf die Patenterteilung: **11.01.2006**
(21) Anmeldenummer: 00113347.9
(22) Anmeldetag: 23.06.2000
(51) Int. Cl.: B60J 7/14, B60J 7/12

(54) **Verstellbares Verdeck für ein Kraftfahrzeug**
Movable vehicle roof
Toit déplaçable pour véhicule

(30) Priorität: 03.07.1999 DE 19930774
(43) Veröffentlichungstag der Anmeldung: 10.01.2001
(73) Patentinhaber: CTS Fahrzeug-Dachsysteme GmbH, 74321 Bietigheim-Bissingen (DE)
(72) Erfinder: Halbweiss, Thomas, 71672 Marbach (DE); Wezyk, Wojciech, 71065 Sindelfingen (DE); Klein, Berthold, 71227 Rutesheim (DE); Neubrand, Frank, West Bloomfield, MI 48322 (US)
(74) Vertreter: Müller, Gottfried

(56) Entgegenhaltungen:
- EP-A- 0 879 722
- DE-C- 19 618 296

## Beschreibung

Die Erfindung betrifft ein verstellbares Verdeck für ein Kraftfahrzeug nach dem Oberbegriff des Anspruches 1. Ein solches Verdeck ist aus DE-C-196 18 296 bekannt.

Aus der Druckschrift DE-PS 943 747 ist ein Kraftfahrzeugverdeck mit einem Verdeckgestänge und einem Verdeckbezug bekannt, das zwischen einer den Fahrzeuginnenraum verschließenden Schließstellung und einer Ablagestellung verstellbar ist, in welcher das Verdeckgestänge und der Verdeckbezug in einem Ablageraum hinter den Fahrzeugsitzen verstaut sind. Das Verdeckgestänge besteht aus einer Mehrzahl von Quer- und Seitenbügeln, die gelenkig mit der Fahrzeugkarosserie verbunden sind. Die Quer- und Seitenbügel sind kinematisch gekoppelt, so daß über den Antrieb eines Bügels sämtliche weiteren Gestängeteile zwangsgesteuert zwischen Schließ- und Ablagestellung verstellt werden.

Ein weiteres verstellbares Verdeck ist aus der Druckschrift DE 43 27 729 C2 bekannt, die ein Verdeck zeigt, welches ein verstellbares Verdeckgestänge und einen auf dem Verdeckgestänge aufgespannten Verdeckbezug zeigt. Verdeckgestänge und Verdeckbezug sind wiederum zwischen Schließ- und Ablagestellung verstellbar. In den Verdeckbezug ist eine Heckscheibe integriert, die bei der Überführung in Ablagestellung in einen hinter den Sitzen gelegenen Ablageraum versenkbar ist.

Bei derartigen Verdecken besteht das Problem, daß die Heckscheibe zur Überführung in Ablagestellung einen verhältnismäßig weiten Bogen beschreiben muß, damit eine Kollision mit den Kopfstützen oder dem Überrollbügel vermieden wird. Zugleich soll der Ablageraum, der auch das Verdeck aufnimmt und sich unmittelbar an den Fahrzeuginnenraum anschließt, aus Platzgründen möglichst klein bauen.

Der Erfindung liegt das Problem zugrunde, ein verstellbares Verdeck für ein Kraftfahrzeug anzugeben, das einfach aufgebaut ist und in Ablagestellung klein zusammengefaltet werden kann.

Dieses Problem wird erfindungsgemäß mit den Merkmalen des Anspruches 1 gelöst.

Gemäß der Neuerung ist dem Verdeckgestänge ein hinterer Querbügel zugeordnet, der zweckmäßig unmittelbar benachbart zum Ablageraum angeordnet ist und aus einem mittleren sowie zwei seitlichen Abschnitten besteht, wobei die seitlichen Abschnitte gegenüber dem mittleren Abschnitt gelenkig verschwenkbar sind. Der hinter Querbügel ist außerdem bei der Überführungsbewegung zwischen Schließstellung und Ablagestellung translatorisch in Richtung der Fahrzeuglängsachse nach hinten verschiebbar und wird insbesondere über die Stellbewegung des Verdecks kinematisch zwangsgeführt. Durch die Verschiebebewegung nach hinten steht genügend Platz zur Verfügung, um auch großbauende Heckscheiben in horizontaler Stellung ablegen zu können. Da der hintere Bügel mit der Heckscheibe verbunden ist, insbesondere über ein Gelenk mit der Heckscheibe gekoppelt ist, bewirkt eine Verschiebung des hinteren Querbügels nach hinten zwangsweise auch eine entsprechende translatorische Verschiebebewegung der Heckscheibe.

Mit der translatorischen Verschiebebewegung des hinteren Querbügels werden zugleich die seitlichen Abschnitte, die gelenkig mit dem mittleren Abschnitt des Querbügels verbunden sind, in Richtung des Fahrzeuginnenraums verschwenkt, wodurch insbesondere in Querrichtung des sich nach hinten verjüngenden Fahrzeugs eine platzsparende Anordnung des Querbügels in Ablagestellung realisiert werden kann. Außerdem ergibt sich durch die Schwenkbewegung der seitlichen Abschnitte des Querbügels der Vorteil, daß die Position der freien Stirnseite jedes seitlichen Abschnittes während der Überführungsbewegung von Schließstellung in Ablagestellung sich nur geringfügig ändert, wodurch ein entsprechend geringes Spiel bei der Anbindung des Verdeckstoffes entsteht. Dadurch wird die Dichtigkeit des Verdecks erhöht.

Beim Schließen des Verdecks läuft die Bewegung des hinteren Querbügels in entgegengesetzter Richtung ab. Der Querbügel wird translatorisch nach vorne verschoben, es entstehen keine strömungstechnischen, räumlichen oder optischen Beeinträchtigungen durch einen nach hinten überstehenden Bügel.

Der hintere Querbügel ist vorteilhaft in einer horizontalen Bewegungsebene verschiebbar und verschwenkbar. In dieser Ausführung führt der hintere Querbügel keine räumliche, sondern nur ebene Bewegung aus. Dementsprechend vereinfacht sich die kinematische Führung des Querbügels.

Das Verdeckgestänge umfaßt vorteilhaft einen weiteren Querbügel, der dem hinteren Querbügel vorgelagert ist. Der vorgelagerte Querbügel ist mit dem hinteren Querbügel über einen Längsspriegel verbunden, der eine kinematische Zwangsführung des hinteren Querbügels bewirkt. In einer vorteilhaften Ausführung ist auch der vorgelagerte Querbügel gelenkig mit der Heckscheibe verbunden.

Vorzugsweise weist das Verdeck ein oberes Dachteil auf, welches zweckmäßig über einen zugeordneten Verstellmechanismus zu betätigen ist. Der Verstellmechanismus ist vorteilhaft als Viergelenk-Mechanismus ausgebildet und weist zwei Seitenbügel auf, die gelenkig mit der Fahrzeugkarosserie verbunden sind. Die Führung des oberen Dachteiles über den Viergelenk-Mechanismus hat den Vorteil, daß das obere Dachteil bei der Überführung in Ablagestellung im wesentlichen horizontal über die Kopfstützen verschwenkt und anschließend abgesenkt werden kann.

Ein Seitenbügel des Viergelenk-Mechanismus ist zweckmäßig gelenkig mit dem vorgelagerten Querbügel verbunden, welcher oberhalb der Heckscheibe verläuft. Eine Stellbewegung des Viergelenk-Mechanismus wird somit über den vorgelagerten Querbügel und den Längsspriegel auf den hinteren Querbügel übertragen. Der Querbügel bildet vorteilhaft gemeinsam mit einem Stützspriegel einen weiteren Viergelenk-Mechanismus, der den Seitenbügel des ersten, das Dachteil beaufschlagenden Mechanismus abstützt.

Weitere Vorteile und zweckmäßige Ausführungsformen sind den weiteren Ansprüchen, der Figurenbeschreibung und den Zeichnungen zu entnehmen. Es zeigen:
- Fig. 1: eine Seitenansicht eines Kraftfahrzeugs mit einem teilweise geöffneten Verdeck,
- Fig. 2: das Verdeck in vergrößerter Darstellung in Schließstellung,
- Fig. 3: das Verdeck bei der Überführung von Schließ- in Ablagestellung.

Bei den folgenden Ausführungsbeispielen sind gleiche Bauteile mit gleichen Bezugszeichen versehen.

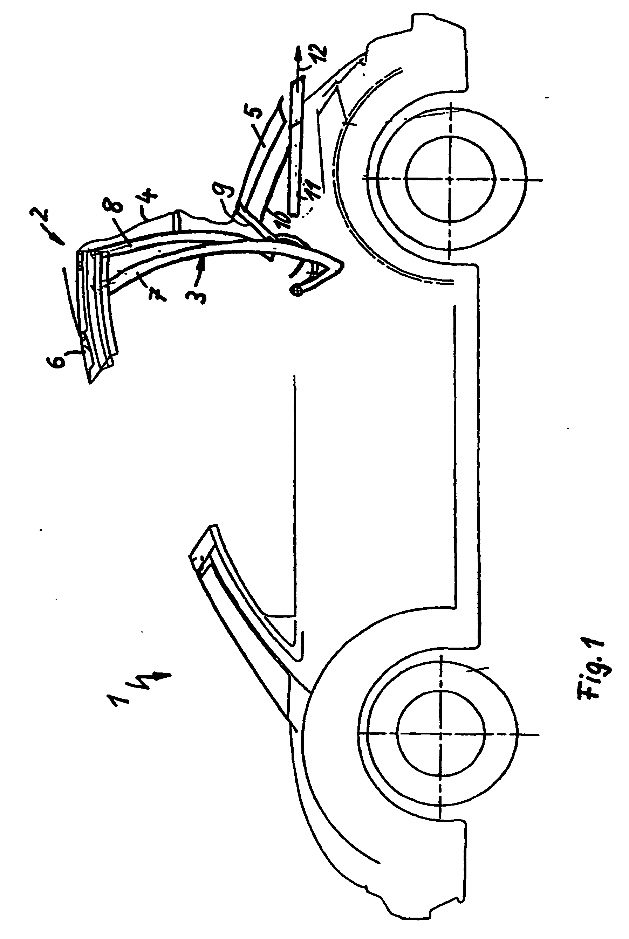

Das in Fig. 1 gezeigte Verdeck 2 eines Kraftfahrzeuges 1 ist zwischen einer Schließstellung, in der der Fahrzeuginnenraum geschlossen ist, und einer Ablagestellung, in der das Verdeck 2 in einer hinter dem Fahrzeuginnenraum angeordneten Ablage verstaut ist, verstellbar ausgebildet. Das Verdeck 2 besteht aus einem Verdeckgestänge 3 mit einer Mehrzahl von Seiten- und Querbügeln bzw. Spriegeln, einem Verdeckbezug 4, einer Heckscheibe 5 sowie einem oberen Dachteil 6, das als starres Bauteil in das Verdeck integriert ist. Das Dachteil 6 ist von einem Viergelenk-Mechanismus gehalten, welcher einen Teil des Verdeckgestänges 3 bildet und an jeder Fahrzeugseite zwei Seitenbügel umfaßt, von denen in der Seitenansicht der Fig. 1 die auf einer Seite angeordneten Seitenbügel 7 und 8 zu erkennen sind. Weiterhin sind dem Verdeckgestänge 3 ein in Fahrzeuglängsrichtung vorgelagerter, sich über die Breite des Verdecks erstreckender Querbügel 9 sowie ein hinterer Querbügel 11, welcher sich ebenfalls über die Breite des Verdecks erstreckt, zugeordnet. Zwischen dem vorgelagerten und dem hinteren Querbügel 9, 11 ist ein Verbindungsspriegel 10 angeordnet, welcher mit dem vorgelagerten Querbügel 9 verbunden ist und eine Stellbewegung des Querbügels 9 auf den hinteren Querbügel 11 überträgt. Im Zwischenraum zwischen dem Querbügel 9 und dem Querbügel 11 befindet sich die Heckscheibe 5.

Der hintere Querbügel 11 ist translatorisch in Richtung des Pfeiles 12 verschiebbar. Die Pfeilrichtung 12 verläuft achsparallel zur Fahrzeuglängsachse. Bei der Überführung von Schließstellung in Ablagestellung wird der hintere Querbügel 11 translatorisch nach hinten verschoben, eine entsprechend umgekehrte Stellbewegung erfolgt bei Überführung des Verdecks von Ablagestellung in Schließstellung.

Die zwischen dem vorgelagerten Querbügel 9 und dem hinteren Querbügel 11 eingespannte Heckscheibe 5 ist gegenüber beiden Querbügeln 9, 11 gelenkig gelagert. Der Verdeckbezug 4 erstreckt sich vom oberen Dachteil 6 bis zur Heckscheibe 5. Darüberhinaus ist der Verdeckbezug auch seitlich an den hinteren Querbügel 11 angebunden.

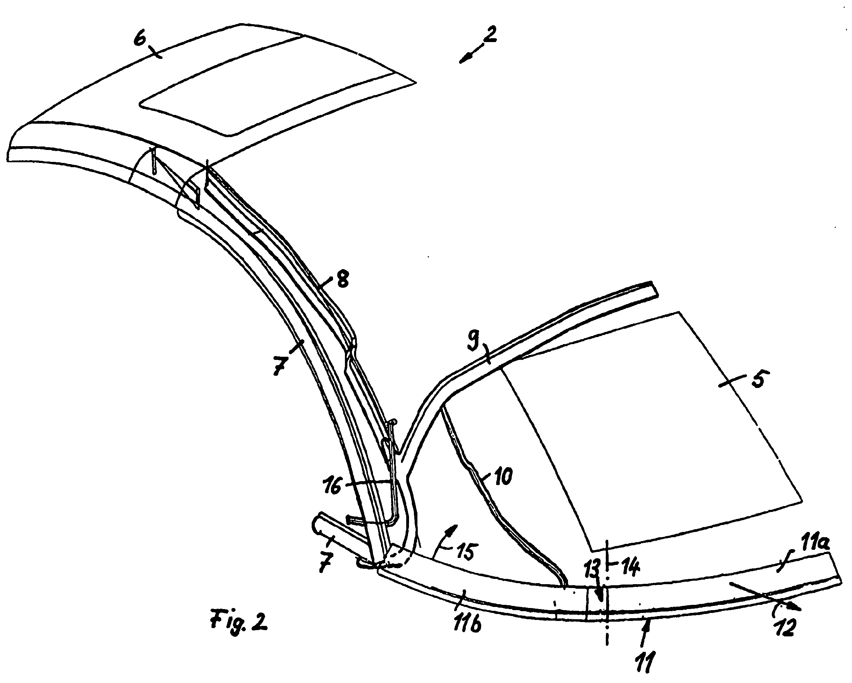

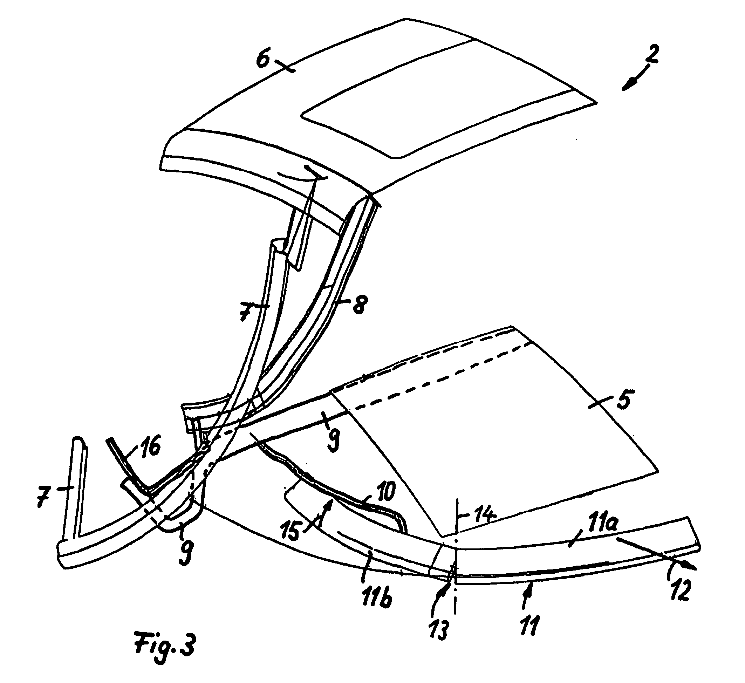

In der perspektivischen Darstellung nach Fig. 2 ist das Verdeck 2 in Schließstellung gezeigt, in der der Fahrzeuginnenraum überdeckt ist. Die Darstellung zeigt ebenso wie Fig. 3 nur eine seitliche Hälfte des Verdecks 2, die nicht dargestellte gegenüberliegende Hälfte ist spiegelsymetrisch angeordnet.

Der hintere Querbügel 11 ist dreiteilig aufgebaut und besteht aus einem mittleren Abschnitt 11a sowie zwei seitlichen Abschnitten, von denen in Fig. 2 nur ein seitlicher Abschnitt 11b zu erkennen ist. Der seitliche Abschnitt 11b ist über ein Gelenk 13 mit dem mittleren Abschnitt 11a gekoppelt, das Gelenk 13 weist eine Gelenkachse 14 auf, welche vorzugsweise im wesentlichen senkrecht verläuft und vorteilhaft in allen Stellungen des Verdecks 2 eine gleichbleibende Richtung beibehält. Der hintere Querbügel 11 bewegt sich bevorzugt in einer im wesentlichen horizontalen Bewegungsebene, in der sowohl eine translatorische als auch eine rotatorische Bewegung des Querbügels 11 stattfindet. Bei der Überführung von Schließ- in Ablagestellung wird der Querbügel 11 in Richtung des Pfeiles 12 translatorisch nach hinten verschoben, zugleich werden die seitlichen Abschnitte 11b gemäß Pfeilrichtung 15 um die Gelenkachse 14 des Gelenkes 13 relativ zum mittleren Abschnitt 11a nach innen in Richtung des Fahrzeuginnenraums verschwenkt, siehe auch Fig. 3. Der hintere Querbügel 11 wird bei der Überführungsbewegung vom Verbindungsspriegel 10 beaufschlagt, der mit dem vorgelagerten Querbügel 9 verbunden ist. Eine Stellbewegung des Querbügels 9 wird über den Verbindungsspriegel 10 auf den hinteren Querbügel 11 übertragen. Der Verbindungsspriegel 10 greift im Bereich des seitlichen Abschnittes 11b am hinteren Querbügel 11 an.

Die Schwenkbewegung um die Gelenkachse 14 des Gelenks 13 hat zur Folge, daß die translatorische Bewegung der freien Stirnseite des seitlichen Abschnittes 11b, die durch die translatorische Verschiebung in Pfeilrichtung 12 hervorgerufen wird, teilweise durch die rotatorische Bewegung kompensiert wird, so daß die freie Stirnseite der seitlichen Abschnitte 11b beim Überführen zwischen Schließ- in Ablagestellung verhältnismäßig nahe beieinander bleiben. Der Bereich der Stofflose wird dadurch vermindert und die Dichtigkeit des Verdeckes erhöht.

Das obere Dachteil 6 ist über einen Gelenkmechanismus mit der Fahrzeugkarosserie verbunden. Der Gelenkmechanismus umfaßt die Seitenbügel 7 und 8, wobei der vordere Seitenbügel 7 gelenkig mit der Karosserie und mit dem Dachteil 6 verbunden ist. Der zweite, hintere Seitenbügel 8 ist am Dachteil 6 gelenkig gelagert, auf der gegenüberliegenden Seite ist der zweite Seitenbügel 8 sowohl mit dem vorgelagerten Querbügel 9 als auch mit einem weiteren Stützspriegel 16 gelenkig verbunden. Der Stützspriegel 16 greift unmittelbar oberhalb der Verbindung zwischen dem vorgelagertem Querbügel 9 und dem Seitenbügel 8 an diesem an. Sowohl der Stützspriegel 16 als auch der vorgelagerte Querbügel 9 sind über weitere Gelenke mit der Fahrzeugkarosserie verbunden. Das Gelenk, über das der Stützspriegel 16 mit der Karosserie verbunden ist, befindet sich zwischen dem Fahrzeuginnenraum und demjenigen Gelenk, das den vorderen Seitenbügel 7 mit der Karosserie verbindet.

In der beschriebenen Ausführung ist das obere Dachteil 6 über einen Mehrgelenk-Mechanismus, welcher insgesamt sieben Gelenke umfaßt, mit der Fahrzeugkarosserie verbunden. Die Gelenke befinden sich zwischen Fahrzeugkarosserie und Seitenbügel 7, zwischen Seitenbügel 7 und Dachteil 6, zwischen Dachteil 6 und Seitenbügel 8, zwischen Seitenbügel 8 und Stützspriegel 16, zwischen Seitenbügel 8 und vorgelagertem Querbügel 9, zwischen Stützspriegel 16 und Fahrzeugkarosserie sowie zwischen vorgelagertem Querbügel 9 und Fahrzeugkarosserie.

## Patentansprüche

1. Verstellbares Verdeck für ein Kraftfahrzeug, das zwischen einer den Fahrzeuginnenraum überdeckenden Schließstellung und einer Ablagestellung verstellbar ist, mit einem Verdeckgestänge (3) mit einer Mehrzahl beweglich angeordneter Quer- und Seitenbügel (7, 8, 9, 11), wobei
- ein hinterer, der Ablage des Verdecks zugewandter Querbügel (11) des Verdeckgestänges (3) mehrteilig mit zumindest einem mittleren Abschnitt (11a) und zwei seitlichen Abschnitten (11b) aufgebaut ist, wobei die seitlichen Abschnitte (11b) über Gelenke (13) mit dem mittleren Abschnitt (11a) verbunden sind, und wobei
- beim Übergang von Schließstellung zu Ablagestellung die seitlichen Abschnitte (11b) des hinteren Querbügels (11) in Richtung des Fahrzeuginnenraums verschwenkbar sind,
**dadurch gekennzeichnet,**
- **daß** der hintere Querbügel (11) beim Übergang von Schließstellung zu Ablagestellung entlang der Fahrzeuglängsachse in Richtung der Fahrzeugrückseite verschiebbar ist,

2. Verdeck nach Anspruch 1,
**dadurch gekennzeichnet,**
**daß** der hintere Querbügel (11) in einer horizontalen Bewegungsebene bewegbar ist.

3. Verdeck nach Anspruch 1 oder 2,
**dadurch gekennzeichnet,**
**daß** das Verdeck (2) eine beweglich befestigte Heckscheibe (5) umfaßt, die mittelbar oder unmittelbar mit dem hinteren Querbügel (11) verbunden ist.

4. Verdeck nach Anspruch 3,
**dadurch gekennzeichnet,**
**daß** die Heckscheibe (5) gelenkig mit dem hinteren Querbügel (11) verbunden ist.

5. Verdeck nach einem der Ansprüche 1 bis 4,
**dadurch gekennzeichnet,**
**daß** ein dem hinteren Querbügel (11) vorgelagerter Querbügel (9) vorgesehen ist, der gelenkig an der Fahrzeugkarosserie gehalten ist, wobei der vorgelagerte Querbügel (9) und der hintere Querbügel (11) über einen Verbindungsspriegel (10) verbunden sind.

6. Verdeck nach einem der Ansprüche 1 bis 5,
**dadurch gekennzeichnet,**
**daß** die Stirnseiten des hinteren Querbügels (11) und des vorgelagerten Querbügels (9) zumindest in Schließstellung in unmittelbarer Nachbarschaft liegen.

7. Verdeck nach einem der Ansprüche 1 bis 6,
**dadurch gekennzeichnet,**
**daß** das Verdeck (2) ein oberes Dachteil (6) aufweist, welches über einen Verstellmechanismus zwischen Schließ- und Ablagestellung verstellbar ist.

8. Verdeck nach Anspruch 7,
**dadurch gekennzeichnet,**
**daß** der Verstellmechanismus mit dem vorgelagerten Querbügel (9) verbunden ist.

9. Verdeck nach Anspruch 7 oder 8,
**dadurch gekennzeichnet,**
**daß** der Verstellmechanismus als Viergelenkmechanismus mit zwei mit der Fahrzeugkarosserie gelenkig verbundenen Seitenbügeln (7, 8) ausgebildet ist, wobei ein Seitenbügel (8) des Viergelenk-Mechanismus mit dem vorgelagerten Querbügel (9) verbunden ist.

## Claims

1. Movable vehicle roof which can be moved between a closed position covering the vehicle interior and a put-away position, having a roof linkage (3) with a plurality of movably arranged transverse and side bows (7, 8, 9, 11),
- a rear transverse bow (11) of the roof linkage (3), which transverse bow faces the roof storage facility, being of multi-part construction with at least one central section (11a) and two lateral sections (11b), the lateral sections (11b) being connected to the central section (11a) via joints (13), and,
- during the transition from the closed position to the put-away position, the lateral sections (11b) of the rear transverse bow (11) being pivotable in the direction of the vehicle interior,
**characterized**
- **in that**, during the transition from the closed position to the put-away position, the rear transverse bow (11) is displaceable along the longitudinal axis of the vehicle in the direction of the rear side of the vehicle.

2. Roof according to Claim 1, **characterized in that** the rear transverse bow (11) is movable in a horizontal movement plane.

3. Roof according to Claim 1 or 2, **characterized in that** the roof (2) includes a movably fixed rear window (5) which is connected indirectly or directly to the rear transverse bow (11).

4. Roof according to Claim 3, **characterized in that** the rear window (5) is connected in an articulated manner to the rear transverse bow (11).

5. Roof according to one of Claims 1 to 4, **characterized in that** a transverse bow (9) which is mounted in front of the rear transverse bow (11) is provided and is held in an articulated manner on the vehicle body, the transverse bow (9), which is mounted in front, and the rear transverse bow (11) being connected via a connecting hoop (10).

6. Roof according to one of Claims 1 to 5, **characterized in that** the end sides of the rear transverse bow (11) and of the transverse bow (9), which is mounted in front, are situated in the immediate vicinity of each other at least in the closed position.

7. Roof according to one of Claims 1 to 6, **characterized in that** the roof (2) has an upper roof part (6) which is movable between a closed position and a put-away position via a movement mechanism.

8. Roof according to Claim 7, **characterized in that** the movement mechanism is connected to the transverse bow (9), which is mounted in front.

9. Roof according to Claim 7 or 8, **characterized in that** the movement mechanism is designed as a four-bar mechanism with two side bows (7, 8) connected in an articulated manner to the vehicle body, one side bow (8) of the four-bar mechanism being connected to the transverse bow (9), which is mounted in front.

## Revendications

1. Capote déplaçable pour un véhicule automobile, qui peut être déplacée entre une position de fermeture recouvrant l'habitacle du véhicule et une position de rangement, comprenant une tringlerie de capote (3) ayant une pluralité d'arceaux transversaux et latéraux (7, 8, 9, 11) disposés de manière mobile, un arceau transversal arrière (11) de la tringlerie de capote (3), tourné vers l'espace de rangement de la capote, étant réalisé en plusieurs parties avec au moins une portion centrale (11a) et deux portions latérales (11b), les portions latérales (11b) étant reliées par des articulations (13) à la portion centrale (11a), et lors du passage de la position de fermeture à la position de rangement, les portions latérales (11b) de l'arceau transversal arrière (11) pouvant pivoter dans la direction de l'habitacle du véhicule,
**caractérisée en ce que**
l'arceau transversal arrière (11), lors du passage de la position de fermeture dans la position de rangement, peut être déplacé le long de l'axe longitudinal du véhicule dans la direction du côté arrière du véhicule.

2. Capote selon la revendication 1,
**caractérisée en ce que**
l'arceau transversal arrière (11) peut être déplacé dans un plan de déplacement horizontal.

3. Capote selon la revendication 1 ou 2,
**caractérisée en ce que**
la capote (2) comprend une vitre arrière (5) fixée de manière mobile, qui est connectée de manière indirecte ou directe à l'arceau transversal arrière (11).

4. Capote selon la revendication 3,
**caractérisée en ce que**
la vitre arrière (5) est connectée de manière articulée à l'arceau transversal arrière (11).

5. Capote selon l'une quelconque des revendications 1 à 4,
**caractérisée en ce que**
l'on prévoit un arceau transversal (9) monté devant l'arceau transversal arrière (11), lequel est maintenu de manière articulée sur la carrosserie du véhicule, l'arceau transversal (9) monté en avant et l'arceau transversal arrière (11) étant connectés par le biais d'une traverse de connexion (10).

6. Capote selon l'une quelconque des revendications 1 à 5,
**caractérisée en ce que**
les côtés frontaux de l'arceau transversal arrière (11) et de l'arceau transversal (9) monté en avant se trouvent à proximité immédiate au moins dans la position de fermeture.

7. Capote selon l'une quelconque des revendications 1 à 6,
**caractérisée en ce que**
la capote (2) présente une partie de toit supérieure (6) qui peut être déplacée entre la position de fermeture et la position de rangement par le biais d'un mécanisme de réglage.

8. Capote selon la revendication 7,
**caractérisée en ce que**
le mécanisme de réglage est connecté à l'arceau transversal (9) monté en avant.

9. Capote selon la revendication 7 ou 8,
**caractérisée en ce que**
le mécanisme de réglage est réalisé sous forme de mécanisme à quadrilatère articulé, avec deux arceaux latéraux (7, 8) connectés de manière articulée à la carrosserie du véhicule, un arceau latéral (8) du mécanisme à quadrilatère articulé étant connecté à l'arceau transversal (9) monté en avant.
